# EUROPÄISCHE PATENTSCHRIFT

(11) **EP 2 512 103 B1**
(45) Veröffentlichungstag und Bekanntmachung des Hinweises auf die Patenterteilung: **14.02.2018**
(21) Anmeldenummer: 12161415.0
(22) Anmeldetag: 27.03.2012
(51) Int. Cl.: H04L 29/08, H04L 12/10, H04L 12/28

(54) **Steuereinheit**
Control unit
Unité de commande

(30) Priorität: 11.04.2011 DE 102011001951
(43) Veröffentlichungstag der Anmeldung: 17.10.2012
(73) Patentinhaber: LOEWE Technologies GmbH, 96317 Kronach (DE)
(72) Erfinder: Weickert, Bernd, 96224 Burgkunstadt (DE)

(56) Entgegenhaltungen:
- US-A1- 2007 130 280
- US-B1- 6 529 589

## Beschreibung

Die vorliegende Erfindung betrifft eine Steuereinheit, bestehend aus einem ersten und einem zweiten Server.

Unter einem Server im Sinne der Erfindung wird ein Server als Hardware verstanden in Form eines Rechners, auf dem eine Server-Software oder eine Gruppe von Server-Programmen laufen, die grundlegende Dienste bereitstellt bzw. bereitstellen. So kann als Server im Sinne der Erfindung auch ein Computer bezeichnet werden, dessen Hardware auf Serveranwendungen abgestimmt ist, teils durch spezifische Leistungsschwerpunkte, wie z. B. hoher Eingabe-/Ausgabe-Durchsatz von Daten, großer Arbeitsspeicher, mehrere CPUs, hohe Zuverlässigkeit.

Das Zusammenschließen von elektrischen Komponenten zu Netzwerken gewinnt auch im Heimbereich, d.h. in privaten Haushalten, immer stärkere Bedeutung. Hierdurch entstehen sogenannte Heimnetzwerke, welche in der Regel miteinander über einen Datenbus elektronisch verbundene Geräte der Unterhaltungselektronik, wie TV-Gerät, DVD-Player, Spielekonsole, usw., umfassen. Im Weiteren sind auch Haussteuernetzwerke bekannt, welche dazu dienen, die zur Versorgung und zum Betrieb eines Wohnhauses oder Eigenheims oder einer Wohnung notwendigen Komponenten zu steuern.

Die bekannten Heim-Server im lokalen Netzwerk, sogenannte Media-Server, sind dafür konzipiert, Daten, insbesondere Video- und Audiodaten, aufzubereiten und an die angeschlossenen Komponenten zu verteilen und/oder diese zu empfangen. Die zentrale Steuereinheit, welche hierfür einzusetzen ist, benötigt eine hohe Speicherkapazität, wie es in der Regel nur mittels Festplatten realisiert werden kann. Daher werden in diesen Fällen Server eingesetzt. Diese Server sind mit Zentralsteuereinheiten mit schnellen Prozessoren ausgerüstet und haben eine hohe Leistungsaufnahme.

Server für die Haussteuerung müssen hingegen kontinuierlich in Betrieb sein, um eine zuverlässige Steuerung und Regelung der Hausautomatisierung zu gewährleisten. Ein solcher Server muss kontinuierlich und schnell Meldungen von Sensoren auswerten und auf diese reagieren, sowie entsprechende Aktuatoren ansteuern. Hierfür sind allerdings keine hohe Rechenleistung und kein hoher Speicherplatz notwendig. Auf Festplatten zur Datenspeicherung kann bei solchen Servern verzichtet werden. Der Prozessor bzw. die Rechnereinheit, die vorrangig die Rechenleistung bestimmt, kann daher stromsparend ausgeführt sein.

Aus der US 2007/0130280 A1 ist ein Heimserver mit mehreren Funktionseinheiten mit Prozessoren bekannt, bei welchem der Prozessor der Serverzentrale die Prozessoren der Funktionseinheiten zur Strom- und Energieeinsparung abgeschaltet, wenn diese nicht benötigt werden oder zu schaltet, wenn entsprechende Funktionen gesteuert werden sollen. Der Server bildet eine geschlossene Hardware mit Zugängen zu verschiedenen Netzwerken, einschließlich einem Heimnetzwerk. Für die Verbindung ist ein Netzwerkprozessor mit diversen Schaltfunktionen vorgesehen. Des Weiteren ist eine Funktionseinheit zum Empfang von Video und Audiosignalen vorgesehen.

Aus DE 10 2007 010 789 A1 sind ein Verfahren zum Betreiben eines Netzwerkes sowie ein lokales Netzwerk und Netzwerkkomponenten bekannt. Hierbei wird ein Funktionsbefehl erzeugt, der konfiguriert ist, um in einer Netzwerkstation eine zugeordnete Funktion auszuführen, wobei dem Funktionsbefehl eine aus erfassten Benutzerdaten abgeleitete Benutzerkennung zugeordnet wird.

Aus DE 299 12 385 U1 ist eine zentrale Haussteuerung für busfähige Teilnehmer in der Gebäudesystemtechnik offenbart. Diese zentrale Haussteuerung kommt insbesondere bei Wohnungen und Einfamilienhäusern unter Verwendung eines Bildschirmes als Datenendgerät, das eine graphische Benutzerschnittstelle aufweist, zur Anwendung.

Aus IEEE Transactions on Consumer Electronics, Ausgabe Februar 2007, Vol. 53, Nr. 1, Seiten 204 - 208, Autoren Jinsoo Han, Intark Han und Kwang-Roh Park, ist ein Energiemanagement für einen Heimserver bekannt. Der beschriebene Heimserver ist aber ein einziger Server, der sämtliche an ihn angeschlossene Einheiten steuert.

Aus DE 10 2008 019 119 B4 ist eine autonome Einschaltvorrichtung, ohne eine Grafikkomponente, zum Einschalten eines Computers in einem Datennetzwerk bekannt. Diese Vorrichtung umfasst einen nichtflüchtigen Speicher zum Speichern wenigstens einer vorbestimmten Netzwerkadresse, eine Netzwerkschnittstelle zum Ankoppeln der Einschaltvorrichtung an das Datennetzwerk, ein Schaltelement in Form eines Tasters oder Schalters zum Erzeugen eines Steuersignals beim Betätigten des Tasters oder Schalters und eine mit dem Speicher, der Netzwerkschnittstelle und dem Schaltelement elektrisch gekoppelte Steuervorrichtung. Diese Steuervorrichtung besteht aus einem Mikrocontroller, der dazu ausgestaltet ist, um ein in einem Speicher abgelegtes Mikroprogramm auszuführen, um bei Erhalt des Steuersignals ein Datenpaket mit einer vorbestimmten Aktivierungssequenz über die Netzwerkschnittstelle an das Datennetzwerk zu übertragen.

Aus US 2006/0085835 A1 ist ein fernsteuerbares Computersystem bekannt, das dazu ausgestaltet ist, um mindestens eine Netzwerkkomponente zu steuern. Das Computersystem besteht aus einem Netzwerksystem, über welches mehrere anschließbare Einheiten gesteuert und konfigurierbar sind.

Aus US 2009/0249428 A1 ist ein Computernetzwerk bekannt, das dazu geeignet ist, mehrere Multimediakomponenten, wie beispielsweise eine Set-Top Box und ein TV-Gerät, zu steuern.

Aus DE 20 2009 012 554 U1 ist eine Zentrale, insbesondere in Form eines Schaltschrankes, zur Steuerung von Funktionseinrichtungen in und/oder im Umfeld von Gebäuden bekannt. Hierbei ist die Zentrale eine programmierbare Zentraleinheit, an welcher eine Mehrzahl von elektrischen Schaltkreisen angeschlossen ist, die mit der Zentraleinheit elektrisch verbunden sind, wobei in die Schaltkreise jeweils mindestens ein nicht adressierbares elektronisches Bauelement, das mittels der Zentrale steuerbar und/oder regelbar ist, eingebunden ist.

Beabsichtigt man nun beide Aufgaben, die Haussteuerung und das Heimnetzwerk in Form eines Media-Servers, mit einer einzigen Hardware abzubilden, benötigt man einen schnellen Rechner mit hohem Energieverbrauch. Die Einspareffekte, die durch den Einsatz einer intelligenten Hausautomatisierung realisierbar sind, werden damit aber schnell hinfällig und die vermeintliche Einsparung wandelt sich ins Gegenteil.

Aufgabe der vorliegenden Erfindung ist es, eine Steuereinheit anzugeben, mit welcher es möglich ist, eine Administrationsfunktion von Haussteuerungskomponenten vorzusehen, und welche zugleich eine zusätliche Steuerung in einem Heimnetzwerk für Multimediazwecke ermöglicht und strom- und energiesparend einsetzbar ist.

Diese Aufgabe wird anhand der Merkmale des Patentanspruches 1 gelöst. Vorteilhafte Ausgestaltungen der Erfindung ergeben sich anhand der abhängigen Ansprüche.

Die erfindungsgemäße Steuereinheit, bestehend aus einem ersten Server und einem zweiten Server, wobei der erste Server zur Überwachung und Steuerung von Haussteuerungskomponenten und der zweite Server zum Empfang, zur Bereitstellung und Übertragung von multimedialen Daten in einem lokalen Netzwerk an entsprechend im lokalen Netzwerk angeschlossene multimediale Komponenten vorgesehen sind. Der erste Server ist direkt an das lokale Netzwerk angeschlossen und ist kontinuierlich aktiv. Die an das lokale Netzwerk angeschlossenen Komponenten kommunizieren mit und über den ersten Server. Diese Kommunikation kann eine ausschließliche Kommunikation sein. Der zweite Server ist nicht kontinuierlich aktiviert, sondern ist nur bei Notwendigkeit der Datenbereitstellung und/oder Datenübertragung im lokalen Netzwerk vom ersten Server über eine separate erste Steuerleitung aktivierbar. Der zweite Server ist insbesondere dann, wenn multimediale Daten zu empfangen, zu speichern oder für die multimedialen Komponenten aufzubereiten und/oder im lokalen Netzwerk bereitzustellen sind, notwendig und wird in diesem Bedarfsfall vom ersten Server aktiviert. In der übrigen Zeit verbleibt der zweite Server deaktiviert oder ausgeschaltet, wobei unter Deaktivierung ein Betriebsmodus oder -zustand des zweiten Servers zu verstehen ist, der einem StandbyModus mit geringer Energieaufnahme und geringem Energiebedarf zu verstehen ist. Der erste Server kommuniziert mit dem zweiten Server über eine separate Datenleitung. Die multimedialen Daten des zweiten Servers sind über den ersten Server in das lokale Netzwerk einspeisbar. Diese Einspeisung kann in einer besonderen Ausführung der Erfindung ausschließlich über den ersten Server erfolgen.

In einer vorteilhaften Ausgestaltung der Erfindung nach Patentanspruch 2 ist vorgesehen, dass der erste Server ein Computer mit einer geringen Rechenleistung und einer kleinen Speichereinheit und der zweite Server ein Computer mit einer hohen Rechenleistung und einer großen Speichereinheit, insbesondere einer Festplatte, ist.

In einer vorteilhaften Ausgestaltung der Erfindung nach Patentanspruch 3 ist vorgesehen, dass der erste Server und der zweite Server mit einer externen Speichereinheit verbunden sind.

In einer vorteilhaften Ausgestaltung der Erfindung nach Patentanspruch 4 ist vorgesehen, dass der erste Server vorrangig mit Aktuatoren und/oder Sensoren zur Haussteuerung kommuniziert und diese steuert.

In einer vorteilhaften Ausgestaltung der Erfindung nach Patentanspruch 5 ist vorgesehen, dass über das lokale Netzwerk eine Anbindung an das Internet mittels eines Routers erfolgt und dass am oder im lokalen Netzwerk vorrangig multimediale Komponenten, insbesondere ein TV-Gerät, ein Sat-Receiver, ein Rundfunksignalempfänger, ein Computer, eine Spielekonsole und/oder eine Telefoneinheit, angeschlossen sind.

In einer vorteilhaften Ausgestaltung der Erfindung nach Patentanspruch 6 ist vorgesehen, dass der erste Server für den zweiten Server die Funktion eines Proxyservers übernimmt.

In einer vorteilhaften Ausgestaltung der Erfindung nach Patentanspruch 7 ist vorgesehen, dass der erste Server den im lokalen Netzwerk angebundenen Komponenten kontinuierlich den Betriebszustand des zweiten Servers mitteilt, so dass die Wartezeiten beim Hochfahren des zweiten Servers überbrückbar sind.

In einer vorteilhaften Ausgestaltung der Erfindung nach Patentanspruch 8 ist vorgesehen, dass sich der zweite Server zu festen vorbestimmten Zeiten automatisch aktiviert oder einschaltet.

In einer vorteilhaften Ausgestaltung der Erfindung nach Patentanspruch 9 ist vorgesehen, dass der erste Server den zweiten Server deaktiviert oder ausschaltet, wenn keine multimedialen Daten bereitzustellen sind, und/oder das Zeitintervall zur Deaktivierung des zweiten Servers durch den ersten Server einstellbar ist.

In einer vorteilhaften Ausgestaltung der Erfindung nach Patentanspruch 10 ist vorgesehen, dass der zweite Server in einen aktiven Standbymodus versetzbar ist, aus welchem dieser über die Datenschnittstelle oder die Datenleitung wieder in den aktiven Zustand überführbar ist, wobei im aktiven Standbymodus der zweite Server eine geringere Energieaufnahme aufweist als im aktivierten Zustand, jedoch schneller in den Aktivierungszustand versetzbar ist und/oder der erste Server den zweiten Server nach einer vordefinierten Zeit, in der der zweite Server ungenutzt ist, zunächst in den aktiven Standbymodus versetzt und nach einer weiteren zweiten Zeitspanne abschaltet.

In einer vorteilhaften Ausgestaltung der Erfindung nach Patentanspruch 11 ist vorgesehen, dass der erste Server Daten, die den zweiten Server betreffen, in der externen Speichereinheit speichert, und der zweite Server unmittelbar nach seiner Aktivierung in der externen Speichereinheit nach dort für den zweiten Server abgespeicherten Daten sucht und beim Vorliegen solcher Daten diese sofort auswertet und bearbeitet.

In einer vorteilhaften Ausgestaltung der Erfindung nach Patentanspruch 12 ist vorgesehen, dass der erste Server ein Haussteuerungsserver und der zweite Server ein Media-server ist und/oder der erste Server die Haussteuerung über ein Funknetz vornimmt und/oder der zweite Server eine erweiterbare und skalierbare Speichereinheit aufweist, vorzugsweise eine Festplatte.

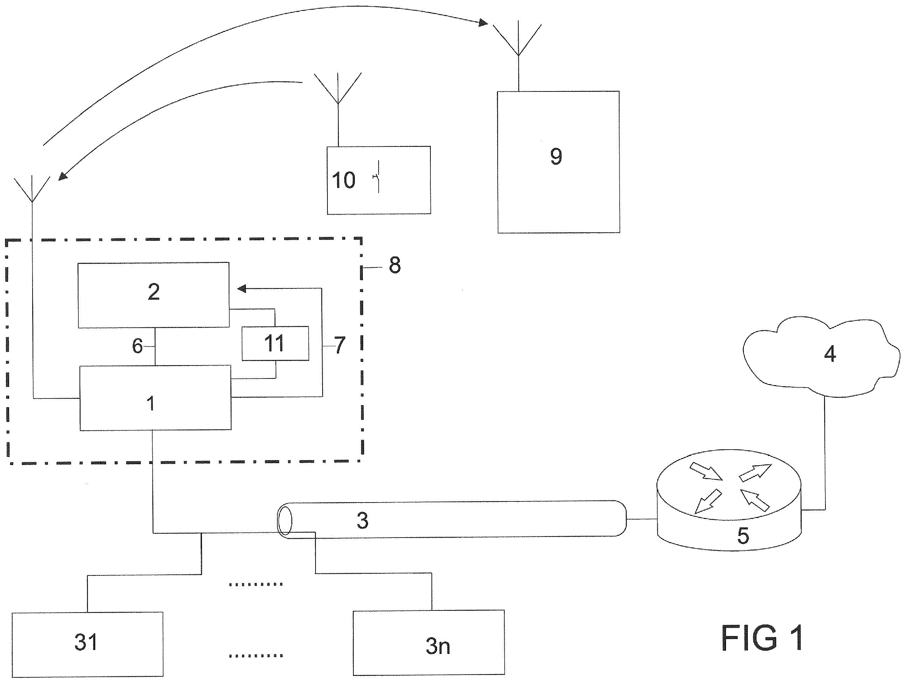

Im Folgenden wird die Erfindung anhand eines konkreten Ausführungsbeispiels anhand der Figur 1 näher erläutert. Diese Beschreibung der Erfindung anhand des konkreten Ausführungsbeispiels stellt keine Limitierung der Erfindung auf dieses konkrete Ausführungsbeispiel dar.

Das Ausführungsbeispiel zeigt die Erfindung anhand einer möglichen Ausführungsdarstellung und in einer spezifischen Ausgestaltung.

### Es zeigt:

- FIG 1: den schematischen Aufbau eines lokalen Heimnetzwerkes sowie Komponenten der Haussteuerungsanlage und der erfindungsgemäßen Steuereinheit.

In FIG 1 ist eine erfindungsgemäße Steuereinheit zum Betrieb eines lokalen Heimnetzwerkes und zur Steuerung einer Haussteuerungsanlage dargestellt.

Die Steuereinheit 8 besteht aus einem ersten Server 1 und einem zweiten Server 2.

Unter einem Server gemäß FIG 1 wird ein Server als Hardwarekomponente verstanden. Der Server besteht aus einer Rechnereinheit, auch CPU bezeichnet, einer Speichereinheit, bestehend aus einem RAM-Speicher und einem ROM-Speicher, einer BIOS-Einheit, einer Ein-/Ausgabeeinheit, diversen Schnittstellen und einem Netzteil. Auf dieser Hardware läuft mindestens eine Server-Software oder eine Gruppe von Server-Programmen, die grundlegende Dienste bereitstellt bzw. bereitstellen. So kann als Server im Sinne der Erfindung auch ein Computer bezeichnet werden, dessen Hardware auf Serveranwendungen abgestimmt ist, teils durch spezifische Leistungsschwerpunkte, wie z. B. hoher Eingabe-/Ausgabe-Durchsatz von Daten, großer Arbeitsspeicher, mehrere CPUs, hohe Zuverlässigkeit.

Die Steuereinheit 8 ist mit Haussteuerungskomponenten 9 und 10 verbunden. Diese Haussteuerungskomponenten 9, 10 sind an die Steuereinheit 8 anschließbar und/oder ankoppelbar. Im konkreten Ausführungsbeispiel nach FIG 1 erfolgt die Kommunikation der Steuereinheit 8, insbesondere deren ersten Server 1, per Datenfunk mit den Haussteuerungskomponenten 9 und 10. Bei der Haussteuerungskomponente 9 handelt es sich beispielsweise um eine Beleuchtungseinheit, welche von der Steuereinheit 8 in Abhängigkeit von der voreingestellten Programmierung ein- und auszuschalten ist. Bei der Haussteuerungskomponente 10 handelt es sich beispielsweise um einen Temperatursensor, der die Außentemperatur kontinuierlich an die Steuereinheit 8 meldet. Anhand vorprogrammierter Einstellungen wird die Heizanlage, welche ebenfalls an der Steuereinheit 8 angeschlossen ist und über den Server 1 angesteuert wird, in Abhängigkeit von den ermittelten Werten der Haussteuerungskomponente 10 außentemperaturabhängig gesteuert. Es können natürlich diverse weitere, nicht in FIG 1 dargestellte Haussteuerungskomponenten angeschlossen werden, wie beispielsweise Thermostate und Temperaturfühler, mit welchen die Raumtemperatur in einem Raum des Hauses, in dem die Steuereinheit 8 in Betrieb ist, steuerbar ist.

Der erste Server 1 der Steuereinheit 8 ist kontinuierlich in Betrieb. Daher ist dieser mit einem strom- und energiesparenden Prozessor und mit einer kleinen Speichereinheit ausgestattet. Die Daten, die von dem ersten Server 1 zu verarbeiten sind, sind Daten, die nicht mit Hochgeschwindigkeit zu verarbeiten sind, daher kann die Auswahl der Systemkomponenten des ersten Servers 1 im Hinblick auf einen geringen Energieverbrauch ausgelegt werden.

Der erste Server 1 ist mit dem zweiten Server 2 über die erste Steuerleitung 7 sowie über den Datenbus 6 verbunden. Die Steuerleitung 7 dient dazu, dass der erste Server 1 im Bedarfsfall den zweiten Server 2 aus dem betriebslosen Zustand aktivieren und in einen Betriebszustand versetzen kann. Der Datenaustausch zwischen dem ersten Server 1 und dem zweiten Server 2 erfolgt über den Datenbus 6. Insoweit weisen der erste Server 1 und der zweite Server 2 ein Dateninterface auf, über welches ein Datenaustausch zwischen dem ersten Server 1 und dem zweiten Server 2 mit hoher Datenrate erfolgen kann. Die Steuereinheit 8 ist über ein Dateninterface an das lokale Netzwerk 3 angeschlossen. Im lokalen Netzwerk 3 ist ein Router 5 vorhanden, über welchen ein Zugang ins Internet 4 ermöglicht wird. Im Weiteren sind an das lokale Netzwerk 3 Netzwerkkomponenten 31, ..., 3n angeschlossen. Hierbei handelt es sich in vorzugsweiser Ausgestaltung der Erfindung um multimediale Komponenten, beispielsweise ein TV-Gerät, einen SAT-Receiver, DVD-Abspielgerät, Datenaufzeichnungsgerät usw.. Die Netzwerkkomponenten 31, ..., 3n werden über den zweiten Server 2 mit Daten versorgt. Der zweite Server 2 steht jedoch nicht direkt mit dem lokalen Netzwerk 3 in Verbindung, sondern die Verbindung erfolgt über die Datenschnittstelle und über den ersten Server 1. Dies hat den Vorteil, dass der erste Server 1 mit den Netzwerkkomponenten 31, ..., 3n kommunizieren kann, auch wenn der zweite Server 2, der zur Datenaufbereitung und Datenübertragung und/oder Speicherung von multimedialen Daten dient, nicht aktiviert ist.

Will eine der Netzwerkkomponenten 31, ..., 3n, beispielsweise das TV-Gerät 31, Daten darstellen und wird diese vom Nutzer hierzu aufgefordert, so sendet diese zunächst eine entsprechende Anfrage an die Steuereinheit 8 an den dortigen ersten Server 1. Der Server 1 aktiviert über die Steuerleitung 7 den zweiten Server 2 und nachdem dieser hochgefahren ist, bereitet dieser die Daten auf und stellt die aufbereiteten Daten über die Datenleitung 6 dem ersten Server 1 zur Verfügung, der diese ins lokale Netzwerk 3 einstellt.

Von besonderem Vorteil ist diese Ausführung, wenn zwei Netzwerkkomponenten 31, ..., 3n miteinander kommunizieren wollen, ohne dass hierfür der zweite Server 2 notwendig ist. Soll beispielsweise eine DVD-Player-Einheit 3n Daten zur Wiedergabe auf dem TV-Gerät 31 zur Verfügung stellen, so ist es ausreichend, wenn die DVD-Player-Einheit 3n die Daten mit entsprechender Kennung in das lokale Netzwerk 3 einstellt und das TV-Gerät 31 diese über das lokale Netzwerk 3 empfängt und darstellt. Hierfür wird dann der zweite Server 2 nicht benötigt, dieser kann energiesparend ausgeschaltet bleiben.

Anders hingegen ist es, wenn Daten aus dem Internet heruntergeladen werden sollen. In diesem Fall werden die Daten vom zweiten Server 2 über das lokale Netzwerk 3 und den Router 5 aus dem Internet 4 heruntergeladen und in einem entsprechenden Speicher gespeichert.

Gemäß FIG 1 ist eine Speichereinheit 11 in der Steuereinheit 8 vorhanden. Die Speichereinheit 11 ist sowohl an dem ersten Server 1 als auch an dem zweiten Server 2 angeschlossen. Die Speichereinheit 11 dient dazu, um größere Datenmengen zwischen dem ersten Server 1 und dem zweiten Server 2 auszutauschen, auch wenn der zweite Server 2 nicht aktiviert ist.

Vorteilhaft ist weiterhin, dass kurze, an die Steuereinheit 8 gerichtete Datenanfragen, welche den Server 2 betreffen, vom ersten Server 1 in der Speichereinheit 11 abgespeichert werden können. Nachdem der zweite Server 2 vom ersten Server 1 aktiviert worden ist, dieses Aufwecken erfolgt über die Steuerleitung 7, sieht der zweite Server 2 zunächst in der Speichereinheit 11 nach, ob Daten oder Anfragen für ihn abgelegt sind und wertet und führt diese im Falle des Vorhandenseins aus. Ist die Speichereinheit 11 leer, so wartet der zweite Server 2 nach seiner Aktivierung auf entsprechende Datenanfragen und -eingaben.

Vorteilhaft ist weiterhin, dass der erste Server 1 den Betrieb der Steuereinheit 8 sicherstellen kann und nicht mit Speicherung oder Zwischenspeicherung von Daten belastet ist. Diese kann er unverzüglich in der Speichereinheit 11 ablegen und dort zwischenpuffern.

Der große Vorteil der gesamten Anordnung liegt darin begründet, die zwei Server 1 und 2 in einer Steuereinheit 8 zusammenzufügen, wobei der erste Server 1, der kontinuierlich in Betrieb ist, auf Energieersparnis ausgelegt wird und der zweite Server 2, der nur im Bedarfsfall aktiviert ist, auf schnelle Datenverarbeitung, hohe Rechenleistung und große Datentransferraten ausgelegt ist. Somit ist es möglich, die Anforderungen an ein modernes Haussteuerungsnetz mit den Kommunikationsanforderungen in einem lokalen Netzwerk zu kombinieren.

In einer weiteren vorteilhaften Ausgestaltung der Erfindung übernimmt der erste Server 1 für den zweiten Server 2 die Funktion des Proxy-Servers. Die Netzwerkkomponenten 31, ..., 3n im lokalen Netzwerk 3 kommunizieren nur mit dem ersten Server 1.

In einer weiteren vorteilhaften Ausgestaltung der Erfindung übermittelt der erste Server 1 kontinuierlich den Betriebszustand des zweiten Servers 2 an die im lokalen Netzwerk 3 angeschlossenen Netzwerkkomponenten 31, ..., 3n. Hierdurch kann die Wartezeit beim Hochfahren des zweiten Servers 2 durch die Netzwerkkomponenten 31, ..., 3n überbrückt werden.

In einer weiteren vorteilhaften Ausgestaltung der Erfindung schaltet der erste Server 1 den zweiten Server 2 zu vorbestimmten vorprogrammierten Zeiten ein, um potenzielle Wartezeiten beim Hochlaufen des zweiten Servers zu verringern oder zu vermeiden. Hierzu werden Profile der Nutzung des zweiten Servers 2 über die Nutzungszeit hinweg kontinuierlich überwacht und gespeichert. Hieraus wird ein Nutzerprofil erstellt. Sieht beispielsweise ein Nutzer kontinuierlich oder häufig um 20.00 Uhr fern, so wird dieses Nutzerverhalten erfasst und der erste Server 1 fährt den zweiten Server 2 bereits kurz vor 20.00 Uhr hoch, damit sofort, zu Beginn der gewünschten und geplanten Sendung, der zweite Server 2 bereits aktiviert ist.

In einer weiteren vorteilhaften Ausgestaltung der Erfindung schaltet der erste Server 1 den zweiten Server 2 nach einer bestimmten vordefinierbaren Zeit ab, wenn der zweite Server 2 nicht benutzt ist und keine Rechenleistung im lokalen Netzwerk 3 angefordert wird. Dieser Zeitrahmen ist frei einstellbar.

In einer weiteren vorteilhaften Ausgestaltung der Erfindung ist der zweite Server 2 in einen aktiven Standby-Modus versetzbar, aus dem er über die Steuerleitung 7 vom ersten Server 1 beschleunigt in den aktiven Zustand überführbar ist. In diesem aktiven Standby-Zustand verbraucht der zweite Server 2 geringere Energie als im aktiven Zustand, jedoch etwas mehr Energie als im ausgeschalteten Zustand. Es ist jedoch in diesem Fall möglich, den zweiten Server 2 schneller in den aktiven Zustand zu verbringen, um somit Wartezeiten beim sonstig erforderlichen Hochfahren des zweiten Servers 2 zu verringern.

Anhand eines abgespeicherten Nutzerprofils ist es daher gegebenenfalls von Vorteil, wenn beispielsweise an Feiertagen oder Wochenenden und aufgrund des Nutzerprofils der zweite Server 2 vom ersten Server 1 in den aktiven Standby-Zustand versetzt wird, um die Wartezeit beim Hochfahren des zweiten Servers 2 im Bedarfsfall zu verringern.

In einer weiteren vorteilhaften Ausgestaltung der Erfindung ist vorgesehen, dass der erste Server 1 den zweiten Server 2 nach einer bestimmten vordefinierten Zeit, in der der zweite Server 2 nicht genutzt ist, zunächst in den aktiven Standby-Zustand versetzt und nach einer weiteren zweiten Zeitspanne, wenn der zweite Server 2 noch immer nicht benutzt ist, komplett ausschaltet.

## Patentansprüche

1. Steuereinheit (8) bestehend aus einem ersten Server (1) und einem zweiten Server (2), wobei der erste Server (1) zur Überwachung und Steuerung von Haussteuerungskomponenten (9, 10) und der zweite Server (2) zum Empfang, zur Bereitstellung und Übertragung von multimedialen Daten in einem lokalen Netzwerk (3) an und von im lokalen Netzwerk (3) vorhandenen multimedialen Komponenten (31, ..., 3n) vorgesehen ist, wobei der erste Server (1) direkt an das lokale Netzwerk (3) angeschlossen und aktiv ist und die an das lokale Netzwerk (3) angeschlossenen Komponenten (31, ..., 3n, 5) ausschließlich mit und über den ersten Server (1) kommunizieren, der erste und der zweite Server (2) Mittel enthalten, um über eine separate erste Steuerleitung (7) zu kommunizieren und den zweiten Server (2) vom ersten Server (1) zu aktivieren, wenn multimediale Daten zu empfangen, zu speichern oder für die multimedialen Komponenten (31, ..., 3n) aufzubereiten und im lokalen Netzwerk (3) bereitzustellen sind, und der erste und zweite Server so ausgestaltet sind, dass der erste Server (1) mit dem zweiten Server (2) über eine separate Datenleitung (6) kommuniziert und die multimedialen Daten des zweiten Servers (2) über den ersten Server (1) in das lokale Netzwerk (3) einspeist

2. Steuereinheit (8) nach Anspruch 1, **dadurch gekennzeichnet, dass** der erste Server (1) ein Computer mit einer geringen Rechenleistung und einer kleinen Speichereinheit und der zweite Server (2) ein Computer mit einer hohen Rechenleistung und einer großen Speichereinheit, insbesondere einer Festplatte ist.

3. Steuereinheit (8) nach Anspruch 1 oder 2, **dadurch gekennzeichnet, dass** der erste Server (1) und der zweite Server (2) mit einer externen Speichereinheit (11) verbunden sind.

4. Steuereinheit (8) nach einem der Ansprüche 1 bis 3, **dadurch gekennzeichnet, dass** der erste Server (1) mit Aktuatoren (9, 10) und/oder Sensoren zur Haussteuerung vorrangig verbunden ist und mit diesen kommuniziert und sie steuert.

5. Steuereinheit (8) nach einem der vorangehenden Ansprüche, **dadurch gekennzeichnet, dass** die Steuereinheit (8) über das lokale Netzwerk (3) mittels eines Routers (5) an das Internet angeschlossen ist und dass am lokalen Netzwerk (3) vorrangig multimediale Komponenten (31, ..., 3n), insbesondere ein TV-Gerät (31), ein Sat-Receiver (3n), ein Rundfunksignalempfänger, ein Computer, eine Spielekonsole und/oder eine Telefoneinheit, angeschlossen sind.

6. Steuereinheit (8) nach einem der vorangehenden Ansprüche, **dadurch gekennzeichnet, dass** der erste Server (1) für den zweiten Server (2) ein Proxyserver ist.

7. Steuereinheit (8) nach einem der vorangehenden Ansprüche, **dadurch gekennzeichnet, dass** der erste Server (1) kontinuierlich den Betriebszustand der im lokalen Netzwerk (3) angebundenen Komponenten (31, ..., 3n, 5) dem zweiten Server (3) während der Wartezeiten beim Hochfahren des zweiten Servers (2) mitteilt.

8. Steuereinheit (8) nach einem der vorangehenden Ansprüche, **dadurch gekennzeichnet, dass** der zweite Server (2) Mittel zum automatischen Einschalten zu festen vorbestimmten Zeiten aufweist.

9. Steuereinheit (8) nach einem der vorangehenden Ansprüche, **dadurch gekennzeichnet, dass** der erste Server (1) den zweiten Server (2) deaktiviert, wenn keine multimedialen Daten bereitzustellen sind, und/oder ein einstellbares Zeitintervall zur Deaktivierung des zweiten Servers (2) überträgt

10. Steuereinheit (8) nach einem der vorangehenden Ansprüche, **dadurch gekennzeichnet, dass** der zweite Server (2) in einen aktiven Standbymodus versetzbar ist, aus welchem dieser über die Datenschnittstelle (6) wieder in den aktiven Zustand überführbar ist, wobei im aktiven Standbymodus der zweite Server (2) eine geringere Energieaufnahme aufweist als im aktivierten Zustand, jedoch schneller in den Aktivierungszustand versetzbar ist, und/oder der erste Server (1) den zweiten Server (2) nach einer vordefinierten Zeit, in der der zweite Server (2) ungenutzt ist, zunächst in den aktiven Standbyzustand versetzt und nach einer weiteren zweiten Zeitspanne abschaltet.

11. Steuereinheit (8) nach einem der vorangehenden Ansprüche, **dadurch gekennzeichnet, dass** der erste Server (1) Daten, die den zweiten Server (2) betreffen, in der externen Speichereinheit (11) speichert und der zweite Server (2) unmittelbar nach seiner Aktivierung in der externen Speichereinheit (11) nach dort für den zweiten Server (2) abgespeicherten Daten sucht und beim Vorliegen solcher Daten diese sofort auswertet und bearbeitet.

12. Steuereinheit (8) nach einem der vorangehenden Ansprüche, **dadurch gekennzeichnet, dass** der erste Server (1) ein Haussteuerungsserver und der zweite Server (2) ein Medienserver ist und/oder der erste Server (1) die Haussteuerung über ein Funknetz vornimmt und/oder der zweite Server (2) eine erweiterbare und skalierbare Speichereinheit aufweist, vorzugsweise eine Festplatte.

## Claims

1. Control unit (8) consisting of a first server (1) and a second server (2), wherein the first server (1) is provided for monitoring and control of house control components (9,10) and the second server (2) is provided for reception, delivery and transmission of multi-media data in a local network (3) to and from multi-media components (31, ..., 3n) present in the local network (3), wherein the first server (1) is directly connected with the local network (3) and is active and the components (31, ..., 3n, 5) connected with the local network (3) communicate exclusively with and by way of the first server (1), the first server and the second server (2) include means in order to communicate by way of a separate first control line (7) and to activate the second server (2) by the first server (1) when multi-media data are to be received, to be stored or to be prepared for the multi-media components (31, ..., 3n) and to be delivered to the local network (3), and the first and second servers are so configured that the first server (1) communicates with the second server (2) by way of a separate data line (6) and supplies the multi-media data of the second server (2) by way of the first server (1) to the local network (3).

2. Control unit (8) according to claim 1, **characterised in that** the first server (1) is a computer with a low computing power and a small memory unit and the second server (2) is a computer with a high computing power and a large memory unit, particularly a hard disc.

3. Control unit (8) according to claim 1 or 2, **characterised in that** the first server (1) and the second server (2) are connected with an external memory unit (11).

4. Control unit (8) according to any one of claims 1 to 3, **characterised in that** the first server (1) is preferentially connected with actuators (9, 10) and/or sensors for house control and communicated with these and controls them.

5. Control unit (8) according to any one of the preceding claims, **characterised in that** the control unit (8) is connected with the Internet by way of the local network (3) by means of a router (5) and that multi-media components (31, ..., 3n), particularly a television receiver (31), a satellite receiver (3n), a broadcast signal receiver, a computer, a games console and/or a telephone unit, are preferentially connected with the local network.

6. Control unit (8) according to any one of the preceding claims, **characterised in that** the first server (1) is a proxy server for the second server (2).

7. Control unit (8) according to any one of the preceding claims, **characterised in that** the first server (1) continuously communicates the operational state of the components (31, ..., 3n, 5), which are coupled into the local network (3), to the second server (3) during the waiting times for booting the second server (2).

8. Control unit (8) according to any one of the preceding claims, **characterised in that** the second server (2) comprises means for automatic switching-on at fixed predetermined times.

9. Control unit (8) according to any one of the preceding claims, **characterised in that** the first server (1) deactivates the second server (2) when no multi-media data are to be delivered and/or transmits a settable time interval for deactivation of the second server (2).

10. Control unit (8) according to any one of the preceding claims, **characterised in that** the second server (2) is shiftable into an active standby mode from which this is transferrable by way of the data interface (6) back into the active state, wherein in the active standby mode the second server (2) has a smaller energy consumption than in the activated state, but is shiftable more rapidly into the activation state, and/or the first server (1) after a predefined time in which the second server (2) is unused initially shifts the second server (2) into the active standby state and switches it off after a further, second period of time.

11. Control unit (8) according to any one of the preceding claims, **characterised in that** the first server (1) stores data relating to the second server (2) in the external memory unit (11) and the second server (2) directly after activation thereof searches in the external memory unit (11) for data stored therein for the second server (2) and in the case of presence of such data immediately evaluates and processes these.

12. Control unit (8) according to any one of the preceding claims, **characterised in that** the first server (1) is a house control server and the second server (2) is a media server and/or the first server (1) undertakes the house control by way of a radio network and/or the second server (2) comprises an expandable and scalable memory unit, preferably a hard disc.

## Revendications

1. Unité de commande (8)comprenant un premier serveur (1) et un deuxième serveur (2), où le premier serveur (1) est prévu pour la surveillance et le contrôle des éléments de domotique (9,10) et le deuxième serveur (2) à la réception, au traitement et au transfert de données multimédia sur un réseau local (3) et des composants multimédia (31,...,3n) disponibles sur le réseau local (3) le premier serveur (1) est directement connecté au réseau local(3) et est actif et les composants (31,...,3n, 5) associés au réseau local (3) communiquent exclusivement avec et via le premier serveur (1), le premier et le deuxième serveur (2)contiennent des données pour communiquer via une première ligne de contrôle séparée (7) et
pour activer le deuxième serveur (2) à partir du premier serveur (1), pour recevoir ou stocker des données ou traiter des composants multimédia (31,...,3n) et les mettre à disposition sur le réseau local (3), le premier et le deuxième serveur sont équipés de manière à ce que le premier serveur (1) communique avec le deuxième serveur (2) via une ligne de données séparée (6) et les données multimédia du deuxième serveur (2) alimente le réseau local (3) via le premier serveur (1).

2. Unité de commande (8) selon la revendication 1, **caractérisée en ce que** le premier serveur (1) est un ordinateur disposant d'une faible puissance de calcul et d'une petite unité de stockage et le deuxième serveur (2) est un ordinateur disposant d'une grande puissance de calcul et d'une grande unité de stockage, et en particulier d'un disque dur.

3. Unité de commande (8) selon les revendications 1 ou 2, **caractérisée en ce que** le premier serveur (1) et le deuxième serveur (2) sont reliés par une unité de stockage externe (11).

4. Unité de commande (8) selon une des revendications 1 à 3, **caractérisée en ce que** le premier serveur (1) est relié en priorité à des actuateurs (9, 10) et/ou des capteurs pour la domotique, communique avec eux et les contrôlent.

5. Unité de commande (8) selon une des revendications précédentes, **caractérisée en ce que** l'unité de commande (8) est connectée à Internet par un réseau local (3) à l'aide d'un routeur (5) et
des composants multimédia (31,...,3n) sont connectés principalement sur le réseau local (3), en particulier un téléviseur (31), un récepteur satellite (3n), un récepteur de signal radio, un ordinateur, une console de jeu et/ou un combiné téléphonique.

6. Unité de commande (8) selon une des revendications précédentes, **caractérisée en ce que** le premier serveur (1) est un serveur proxy pour le deuxième serveur (2).

7. Unité de commande (8) selon une des revendications précédentes, **caractérisée en ce que** le premier serveur (1) communique en permanence au deuxième serveur (3) l'état de fonctionnement des composants (31,...,3n, 5) qui sont reliés au réseau local (3) pendant le temps d'attente
lors du démarrage du deuxième serveur (2).

8. Unité de commande (8) selon une des revendications précédentes, **caractérisée en ce que** le deuxième serveur (2) fournit des moyens à heure fixe pour la mise en marche automatique.

9. Unité de commande (8) selon une des revendications précédentes, **caractérisée en ce que** le premier serveur (1) désactive le deuxième serveur (2) lorsqu'il n'y a aucune donnée multimédia et/ou un intervalle de temps à paramétrer pour désactiver le deuxième serveur (2)

10. Unité de commande (8) selon une des revendications précédentes, **caractérisée en ce que** le deuxième serveur (2) peut être mis en mode veille active et peut repasser en mode actif via l'interface de données (6), où le deuxième serveur (2) consomme moins d'énergie en mode veille active qu'en mode actif, mais peut être basculé en mode actif plus rapidement, et/ou le premier serveur (1) faisant passer le second serveur(2) en mode veille active avant de l'éteindre, après un délai prédéfini durant lequel le deuxième serveur (2) est inutilisé.

11. Unité de commande (8) selon une des revendications précédentes, **caractérisée en ce que** le premier serveur (1) stocke des données qui concernent le deuxième serveur (2) dans l'unité de stockage externe (11) et le deuxième serveur (2) cherche les données stockées pour le deuxième serveur (2), immédiatement après l'activation dans l'unité de stockage (11) externe, les évalue si elles sont disponibles et les traite immédiatement.

12. Unité de commande (8) selon une des revendications précédentes, **caractérisée en ce que** le premier serveur (1) est un serveur de domotique et le deuxième serveur (2) est un serveur média et/ou le premier serveur (1) effectuant la commande domotique via un réseau radio et/ou le deuxième serveur (2) disposant d'une unité de stockage extensible et modulable, de préférence un disque dur.
